# EUROPEAN PATENT APPLICATION

(11) **EP 2 296 065 A1**
(43) Date of publication of application: **16.03.2011**
(21) Application number: 09290666.8
(22) Date of filing: 03.09.2009
(51) Int. Cl.: G05B 19/042

(54) **Control unit and method of operating a control unit**

(71) Applicant: Alcatel Lucent, 75008 Paris (FR)
(72) Inventor: Kopp, Dieter, 75428 Illingen (DE); Rähmer, Silke, 75428 Illingen (DE); Wagner, Janosch, 97486 Königsberg (DE)
(74) Representative: Schäfer, Wolfgang

(57) **Abstract**

The invention relates to a control unit (100) for controlling the supply of a resource (R), particularly electric current and/or water and/or gas and/or fuel to a load (200), wherein said control unit (100) comprises a resource input (110) for receiving said resource (R), a resource output (120) for outputting said resource (R) to said load (200), storage means (130) for storing at least one load profile which characterizes a, preferably typical, load behaviour of a load (200) consuming said resource (R), measuring means (140) for determining a current load behaviour of a load (200) consuming resources (R) output by said resource output (120), processor means (150) for comparing the stored load profile with said current load behaviour and for controlling the supply of said resource (R) to said load (200) based on said comparison.

## Description

### Field of the Invention

The present invention relates to a control unit for controlling the supply of a resource, particularly electric current and/or water and/or gas and/or fuel to a load.

The present invention further relates to a method of operating a control unit for controlling the supply of a resource to a load.

### Background

Prior art systems, particularly for supplying a load with electric energy, are widely used, for instance in the form of circuit breakers which disconnect an electrical circuit of e.g. a home installation from a utility grid if the current flowing into the electric circuit exceeds a predetermined limit.

Accordingly, there is a need to provide more sophisticated control units that enable a flexible and secure resource usage.

### Summary

According to the present invention, regarding the above mentioned control unit, this object is achieved by said control unit comprising a resource input for receiving said resource, a resource output for outputting said resource to said load, storage means for storing at least one load profile which characterizes a, preferably typical, load behaviour of a load consuming said resource, measuring means for determining a current load behaviour of a load consuming resources output by said resource output, and processor means for comparing the stored load profile with said current load behaviour and for controlling the supply of said resource to said load based on said comparison.

The inventive control unit advantageously enables a sophisticated control of a resource's supply to the load based on operational details of said load.

I.e., in contrast to prior art circuit breakers in the field of supply of electric energy, the inventive control unit not only enables to disconnect a load from the utility grid upon drawing too much current. The inventive control unit rather enables to also perform a detailed analysis of a load behaviour, which in the case of an electric load may be considered as a temporal sequence of current values representing the current actually drawn from the load. Based on this information, the inventive control unit enables to alter the supply of the resource, electric current in the present case, to the load.

I.e., instead of only monitoring a predetermined maximum current value as done by prior art circuit breakers, the inventive control unit advantageously enables to perform a detailed analysis of a load behaviour of a load connected to the control unit. Thus, a correspondingly flexible response regarding resource control is possible in reaction to a plurality of different load behaviours.

For instance, the load behaviour of a load connected to the inventive control unit may be analysed for a period of time, e.g. for some hours of operation of said load, and the inventive control unit may evaluate data so obtained. If the load's actual load behaviour differs significantly from a typical load behaviour, which might be stored to a memory of the inventive control unit, the control unit may determine to terminate the supply of said load with the resource, i.e. electric current. This is particularly useful in cases of an impending failure of said load to avoid hazardous operating conditions.

Alternatively, it is also possible to signal a presumed abnormal operating condition of said load to an operator of said control unit prior to disconnecting said load.

According to an advantageous embodiment of the present invention, said load profile comprises a plurality of values, preferably arranged in a temporal sequence, of and/or depending on at least one physical parameter that characterizes an amount or degree, respectively, of resource consumption by said load, wherein said physical parameter particularly comprises a) in the case of said resource comprising electric energy: an electric current and/or active power and/or reactive power, b) in the case of said resource comprising water and/or gas and/or fuel: a mass flow rate and/or a pressure.

That is, if the resource that is to be controlled by the inventive control unit is electric energy, the preferred physical parameters defining a load behaviour as analysed according to the present invention comprise a temporal sequence of electric current values and/or active power and/or reactive power values. Such values may e.g. be determined and/or stored with a predetermined sample rate which depends on a precision the inventive resource control is desired to provide. For instance, a detailed analysis of a typical home appliance such as a washing machine may be performed by choosing sample rates of about 1 to 10 samples per minute.

However, the present invention is not limited to controlling electric energy as a resource. The inventive control unit may rather also control other resources such as water and/or gas and/or fuel, wherein preferably a mass flow rate and/or a pressure is considered for analysing the load behaviour. Different resources may also be provided simultaneously to a load according to the present invention.

According to a further advantageous embodiment of the present invention, the inventive control unit is configured to determine and store one or more load profiles of loads receiving said resource from the resource output of said control unit, which enables said control unit to dynamically learn the load behaviour and/or load profiles of loads or appliances which have not previously been connected to said control unit. By determining and storing said load profiles of new types of loads or new types of appliances such as electric devices of a household, e.g. a washing machine, the inventive control unit is able to adapt its operation to said new appliances which is very advantageous in that said control unit may be chosen to control the operation of arbitrary appliances without complex configuration procedures.

According to a further advantageous embodiment of the present invention, said control unit comprises a communications interface for exchanging data with further control units and/or a central unit configured to coordinate a cooperation of several control units.

If several inventive control units are connected to the same electric circuit e.g. of a home, different appliances such as a washing machine and a dryer may be operated under control of the inventive control units which leads to several advantages:

Firstly, since the inventive control units are enabled to communicate with each other via said communications interface, the inventive control units may exchange information on a type of load which is currently connected to them and may thus synchronize the granting of or supply with resources such as electric current to the different loads in an optimized manner that both prevents a conventional circuit breaker to disconnect the whole electric circuit from the supply grid and eliminates the need for a manual control of both appliances such as manually activating each appliance one after the other.

The inventive control unit may rather analyse each appliance's load characteristic and may synchronize the operation of its appliance with the operation of an appliance connected to another control unit such that at no time an overall current drawn by both appliances will exceed the maximum current monitored by the conventional circuit breaker. Nevertheless, both appliances may well be activated at least in an overlapping manner which avoids delays as known from prior art operation according to which both appliances have to be operated one after another.

According to a further advantageous embodiment of the present invention, said control unit is configured to receive commands via said communications interface and to control the supply of said resource to said load based on said commands.

A central unit for coordinating the operation of several inventive control units may be provided which analyses the load behaviour of each load connected to the control units and which may in response to this analysis provide an operation schedule for the respective loads. Corresponding control information is transmitted from said central unit to said control units via said communications interface.

Any type of communications channel may be chosen for implementing and contacting the inventive communications interface, for instance power line communication utilizing high frequency data transmission on existing power supply lines of the electrical grid, wireless local area network (WLAN) communications, other types of short-range radio communications such as Bluetooth, ZigBee and the like.

Furthermore, it is also possible to provide dedicated communication lines such as wires or optical fibres in order to enable a communication as defined by the present invention.

Moreover, the inventive control unit may also receive commands for controlling the operation of a load connected to the control unit from an operator of the utility grid. This is particularly useful in the case of numerous loads drawing large currents as, for example, is the situation during summer season with numerous air-conditioning units activated in a plurality of homes, commercial and industrial buildings.

If each of said plurality of air-conditioning units is provided with an inventive control unit, an operator of the utility power grid may determine a schedule according to which only a predetermined number of loads, i.e. air-conditioning units, is activated or allowed to operate with maximum power, respectively, at the same time which helps to avoid overloads in the power utility grid infrastructure. I.e., by using the inventive control unit, a large number of electric loads may be operated in a synchronized manner so as to avoid overloads of the electric utility grid. For instance, a first number of air-conditioning units may be switched on for a first time according to the inventive control of the control unit, and a second number of air-conditioning units may be switched on for a second time, i.e. while the first number of air-conditioning units is switched off again or at least switched to a sleep mode or the like in which they only consume a comparatively small amount of electric energy.

The same strategy may also be used to control a large number of electric loads which generate reactive power.

According to a further advantageous embodiment of the present invention, said control unit is configured to control the supply of the resource to said load based on an activation time of that load and/or on an amount of resources delivered to that load within a predetermined time interval and/or on a type of that load.

According to the present invention, the activation time may be utilised as a measure for controlling resource supply to a load. For instance, if the control unit is aware of the fact that its electric load is a toaster, a maximum allowed uninterrupted activation time may be set to e.g. ten minutes. If the inventive monitoring of the load behaviour determines that the activation time actually exceeds said maximum time of ten minutes, the inventive control unit may advantageously conclude that there is an error with the operation of the toaster and may shut down the toaster for security reasons.

Furthermore, an overall amount of electric energy which has already been delivered to a load within a predetermined amount of time may be considered in order to determine whether to shut down a load or not. This criterion may for instance be used with typical home appliances such as washing machines and dryers and the like, which is based on the assumption that a proper operation of such appliances correlates with a fixed amount of electric energy that does not exceed predetermined maximum values.

The inventive control unit may be configured to determine the type of load connected to it by analysing the load behaviour. For instance, various shapes, i.e. temporal sequences, of a current that is typically drawn by a specific load during operation, may be stored to a memory of the control unit, and during operation of the load, the processor unit of the inventive control unit may compare the actual load behaviour with the different stored shapes in order to figure out which type of load is actually connected to the control unit.

Furthermore, it is also possible that the inventive control unit, particularly in the case of being configured to control the supply of electric energy, is pre-programmed to comprise typical load behaviour data of an appliance it is integrated to.

That is, the inventive control unit may advantageously be integrated into home appliances and other devices consuming corresponding resources.

According to a further advantageous embodiment of the present invention, the control unit is configured to compare a load's load behaviour during several operation cycles of that load and to analyse changes of that load behaviour. This enables to determine error conditions which often lead to a comparatively slow alteration of a device's load behaviour. For instance, a motor of a washing machine may gradually increase its current consumption which is due to aging effects of its bearings and the like. The inventive control unit may detect such changes by analysing the load behaviour and upon detection of such change may signal this operational state to a user or a central unit.

According to a further advantageous embodiment of the present invention, the inventive control unit is configured to, preferably simultaneously, control the supply of a plurality of resources to the load. That is, the inventive control unit may not only control a supply of electric current to the load but also e.g. a water supply to the load, which is particularly advantageous in the case of home appliances such as washing machines.

In analogy to what has been explained above regarding the load behaviour as characterized by a current drawn by the load, as far as e.g. washing machines are considered, there is also a typical load behaviour defined by the washing machine's water consumption and its temporal profile.

Deviations from such profile may also indicate errors during the operation of the home appliance and may be signalled by the inventive control unit likewise. Furthermore, by shutting down the water supply to the load once a corresponding abnormal load profile has been detected, hazardous operating conditions may be avoided.

Apart from integrating the inventive control unit into a housing of an electric load such as a home appliance or the like, it may also be integrated into a power plug, preferably a mains plug, of a device.

It is also possible to integrate the inventive control unit into an electric multiple plug. For instance, an electric multiple plug may be provided which comprises an input plug and a plurality of output sockets, wherein at least one of said plurality of output sockets is connected to said input plug via a control unit according to the present invention. This configuration enables to flexibly operate a number of electric loads under control of the inventive control unit, while other devices may be connected to the conventional output sockets of the electric multiple plug, which do not require inventive resource control.

A further solution to the object of the present invention is given by the method of claim 11. The inventive method comprises: determining a current load behaviour of a load consuming resources output by said resource output by measuring means, comparing the stored load profile with said current load behaviour by processor means, and controlling the supply of said resource to said load based on said comparison.

According to a further advantageous embodiment of the present invention, the control unit coordinates the provisioning of the resource to its associated load with at least one further control unit, preferably so as to not exceed predetermined limits regarding a current overall resource usage.

According to another advantageous embodiment of the present invention, the inventive control unit notifies a remote device of its operational state.

### Brief Description of the Figures

Further features, aspects and advantages of the present invention are given in the following detailed description with reference to the drawings in which:
- Figure 1: depicts a schematic block diagram of a control unit according to the present invention,
- Figure 2: depicts a first embodiment of an inventive control unit for controlling electric energy,
- Figure 3: schematically depicts a temporal sequence of operational parameters of the inventive control unit,
- Figure 4: depicts a typical operating scenario involving a plurality of inventive control units,
- Figure 5: depicts a flow-chart of a first embodiment of the method according to the present invention, and
- Figure 6: depicts a further embodiment of the present invention.

### Description of the Embodiments

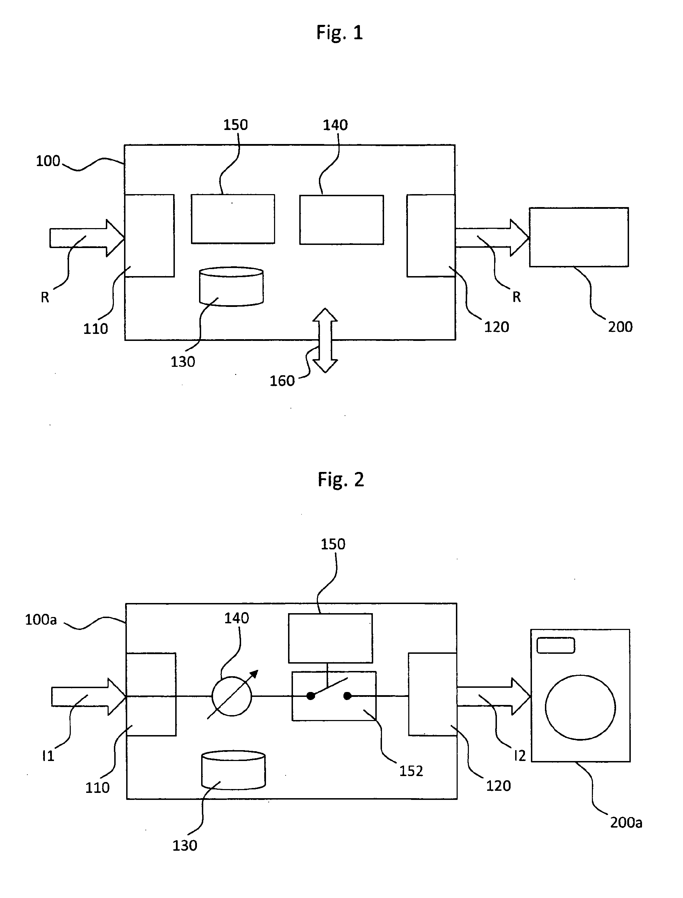

Figure 1 depicts a schematic block diagram of a first embodiment of the inventive control unit 100.

The control unit 100 comprises a resource input 110 for receiving a resource R, wherein said resource R may e.g. be an electric current and/or water and/or gas and/or fuel or any other resource the supply of which to another device may be controlled by conventional systems.

The inventive control unit 100 further comprises a resource output 120 for outputting said resource R to a load 200 which is associated to the inventive control unit 100 and which consumes the resource R.

Moreover, the inventive control unit 100 comprises storage means 130 for storing at least one load profile which characterises a, preferably typical, load behaviour of a load 200 consuming said resource R. The storage means 130 may e.g. comprise an electronic memory such as an EEPROM-Memory or another type of semiconductor memory. The storage means 130 may also comprise a hard disc-type memory or an optical memory.

The inventive control unit 100 also comprises measuring means 140 for determining a current load behaviour of a load 200 consuming resources R output by said resource output 120 and processor means 150 for comparing the stored load profile with said current load behaviour and for controlling the supply of said resource R to said load 200 based on said comparison.

The inventive control unit 100 may e.g. be configured to control the supply of an electric current from a public power utility grid (not shown) to said load 200, which may e.g. represent a home appliance such as a washing machine.

Alternatively, the inventive control unit 100 may also be configured to control other resources R such as water and/or gas and/or fuel to said load 200.

While the inventive principle of resource control is independent of the specific type of resource R, the present invention is explained with respect to Figure 1 assuming that electric current is used as a resource R to be controlled by the inventive control unit 100.

For the following explanation of the basic principle of the present invention, it is assumed that the inventive control unit 100 does not cut a supply of electric current to the load 200 which is associated to the control unit 100. I.e., the load 200, which may e.g. be a typical home appliance or another electric load, is supplied with an electric current from the resource output 120 of the inventive control unit 100. For the electric current to be provided at the resource output 120, the processor means 150 control corresponding switching means (not shown) which establish an electrically conductive connection between the resource input 110 and the resource output 120 of the control unit 100.

In this state of the inventive control unit 100, the electric current provided by the resource output 120 to the load 200 is primarily determined by an operational characteristic of that load 200. For instance, if the electric load 200 requires a large amount of electrical energy, a higher current will be drawn by the load 200 from the resource output 120 as compared to a case in which the load 200 only requires a comparatively small amount of electric energy.

The inventive control unit 100 determines a current load behaviour of the load 200 which is accomplished by the measuring means 140 sampling the electric current drawn by the load 200 at a predetermined sample rate.

The sampling is preferably performed over the complete operating time of the load 200, wherein said operating time may e.g. be defined as an interval during which the load 200 consumes a non-vanishing amount of electric energy.

Data on the temporal change of the current consumed by the load 200 represents a load behaviour in the sense of the present invention.

According to the present invention, the inventive control unit 100 compares the load behaviour with a load profile that is stored in the storage means 130.

Further, according to the present invention, the processor means 150 control the supply of the resource R, i.e. electric current in the present example, to said load 200 based on said comparison.

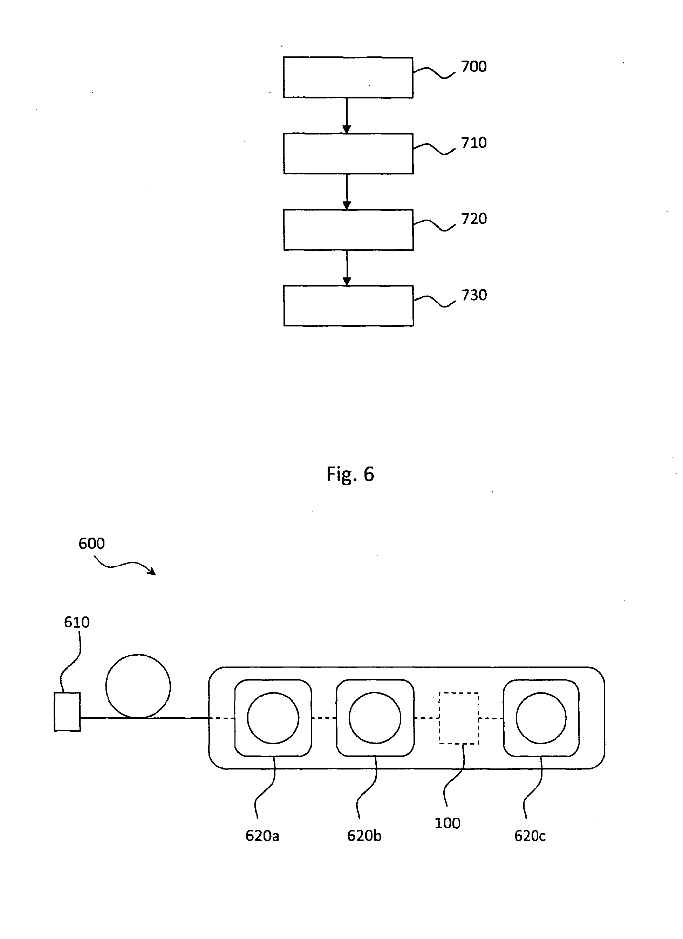

This basic inventive process is also illustrated by the flowchart depicted in figure 5. In a first step 700, the electric control unit 100 determines a current load behaviour of the load 200. In step 710, the electric control unit 100 retrieves a load profile from the storage means 130. Step 710 may also be carried out in parallel with step 700.

In step 720, the inventive control unit 100 compares the retrieved load profile with the current load behaviour. In step 730, finally, the inventive control unit 100 controls the supply of electric current to the load 200 based on the comparison performed within step 720.

According to the present invention, a variety of different measures may be taken in step 730 upon the inventive comparison of the current load behaviour with the stored load profile.

For instance, if the current load behaviour basically corresponds to the stored load profile within a predetermined range of tolerance, the inventive control unit 100 may conclude that load 200 is correctly associated with the control unit 100 in that the control unit 100 has already stored load profiles properly characterising the operation of that load 200.

If the current load behaviour of the load 200 is significantly different from the stored load profile, the inventive control unit 100 may conclude that the specific load 200 currently associated with the control unit 100 is a new type of load, i.e. a load 200 which has not yet been assigned to control unit 100 before. In this case, the control unit 100 may determine to store the current load behaviour in form of a further load profile to the storage means 130 for future retrieval and comparison with a then determined current load behaviour. That is, for a future operation of said load 200 with said control unit 100, the control unit 100 may consider the load 200 as a known device type.

Moreover, if the comparison 720 (figure 5) of the current load behaviour and the load profile results in significant differences e.g. not concerning the whole load profile but only concerning specific sample values or sample value ranges of the load profile, the inventive control unit 100 may conclude that the load 200 does not operate properly any more. For instance, if the current load behaviour of said load 200 indicates that said load 200 requires an excessive amount of electric current as compared to a stored load profile in a certain time interval, the control unit 100 may conclude that said load 200 is defective and may thus decide to not supply said load 200 with electric current anymore in order to prevent damages or fire that may result from an erroneous operation of that load 200.

The control unit 100 may also signal any of these operational states or results of the determinations made in step 730 to a remote system, a user of the load 200 or any other instance that may be contacted by means of a communications interface 160 provided within the control unit 100.

The communications interface 160 may e.g. comprise a wireless network interface, preferably according to at least one of the IEEE 802.11(x) and/or IEEE 802.15.(y) standards.

Furthermore, power line communications, i.e. the transmission of high frequency data via electric lines of the utility power grid, may also be employed to implement the inventive communications interface 160.

In contrast to conventional prior art circuit breakers which only provide for cutting the electric power supply to a load 200 upon sensing an excessive current drawn by that load 200, the inventive control unit 100 sophisticatedly determines a detailed load behaviour of the load 200 by analysing the temporal shape of the current drawn by said load 200 over a predetermined time interval, preferably a complete activation time interval such as some hours.

By doing so, detailed information on the operation of said load 200 and possible errors during its operation may be obtained. Particularly, by comparing a current load behaviour with a stored load profile, it is also possible to recognise aging effects of the load 200 at a very early point in time.

For instance, the inventive step 720 (figure 5) of comparing may advantageously reveal slight increases in the consumption of electrical power of said load 200 which would not yet trigger conventional circuit breakers. However, from these slight increases, which are detected according to the present invention, the inventive control unit 100 may conclude that an aging process of the load 200 proceeds and has reached a specific stage. By systematically monitoring said aging process, the inventive control unit 100 may advantageously signal corresponding information to an operator of said load 200.

Thereby, security issues such as an impending breakdown of the load 200 or the like may be detected at a very early stage of operation, whereby operational security of the whole system 100, 200 is increased.

According to a further embodiment, said control unit 100 may also analyze at least one parameter of said resource R being supplied to said resource input 110, wherein in the case of said resource R comprising electric energy, said parameter particularly comprises an electric voltage and/or a frequency, and wherein in the case of said resource R comprising water and/or gas and/or fuel said parameter particularly comprises a supply pressure and/or a temperature and/or a degree of purity. This advantageously enables to protect the load 200 in case of a poor resource supply such as overvoltage conditions within an electricity supply grid or a too high degree of harmonics in a 50 Hz / 60 Hz AC supply. Based on the analysis, the load 200 may e.g. be, at least temporarily, disconnected from the supply grid.

As already mentioned above, the inventive control unit 100 is not limited to control electric resources R such as electric current, but it is rather capable of controlling other types of resources R, too, e.g. water, gas or fuel or further resources that may be controllably supplied to a load 200 in the sense of the present invention.

Depending on the specific implementation, of course, the respective input 110 and output 120 and the measurement means 140 and corresponding control means (not shown) controlling the supply of that resource R have to be provided.

In the case of electric energy as a resource R, controllable switching means 152 may be provided to control the resource supply to load 200a, confer figure 2.

In the case of gas and/or water and/or fuel, respective controllable switching means capable of controlling a fluid flow to said load 200 (figure 1) have to be provided for the inventive control unit 100. Such switching means may e.g. comprise electrically controllable valves.

As already pointed out above, figure 2 depicts a further embodiment of the present invention, wherein the control unit 100a is configured to control the provisioning of electric current to a load 200a, which in the present case is represented by a washing machine.

The control unit 100a receives at its resource input 110, which may be configured as a conventional electric mains power plug, an input current I1. At its resource output 120, which may be configured in the fashion of a conventional wall socket, the control unit 100a provides an output current I2 to the washing machine 200a.

Depending on a current load behaviour of said washing machine 200a and a stored load profile for said washing machine 200a, the control unit 100a controls the supply of said washing machine 200a with the electric current I2.

For this purpose, the control unit 100a comprises controllable switching means 152, which may e.g. be realised in the form of a relay, that may be controlled by the processing means 150 so as to electrically connect the resource output 120 with the resource input 110. In this case, the washing machine 200a is provided with an electric current I2=I1 that solely depends on its operation characteristic, i.e. load behaviour.

If the control unit 100a, as a result of the inventive monitoring and comparing process, confer figure 5, concludes that a safe operation of washing machine 200a is not given anymore, the control unit 100a may disconnect the resource output 120 from the resource input 110 by correspondingly actuating the controllable switch 152. Upon such disconnection, the washing machine 200a is not provided with electric current anymore.

Instead of controllable switching means 152 which may only switch on and switch off the supply of electric current I2 to the washing machine 200a, the inventive control unit 100a may also comprise more sophisticated switching means (not shown), which may be controlled by the processing means 150 to supply the resource output 120 with a predetermined reduced amount of electric energy.

For instance, if said load 200 (figure 1) is a purely ohmic load such as a light bulb or a heating apparatus, it is possible that said control unit 100a (figure 2) is configured to selectively supply the light bulb with a predetermined amount of electric energy other than the amount of electric energy which would nominally be drawn by the load if directly connected to the power supply grid.

For instance, the inventive control unit 100a may be configured to determine a load behaviour of a light bulb, and upon determining that an activation time of that light bulb exceeds a predetermined maximum time of e.g. 24 hours, the inventive control unit 100a may conclude that the light bulb has not been activated for such a long time on purpose. As a consequence, the electric control unit 100a may, by means of its switching means, reduce the amount of electric energy delivered to the light bulb. This may e.g. be accomplished by switching means that offer phase angle control of the electric energy provided to the light bulb.

As depicted by figure 2, in the case of the resource R being electric energy, the measuring means 140 may be implemented in the form of measuring means for electric current. Alternatively or in addition thereto, the measuring means 140 may also be configured to determine an amount of active power and/or reactive power delivered to the load 200a.

By doing so, the inventive control unit 100a is also capable of controlling a load 200a in the inventive manner not only depending on a current drawn by said load but also depending on e.g. reactive power generated or consumed by said load 200a, which may also be important to ensure power quality in power supply grids.

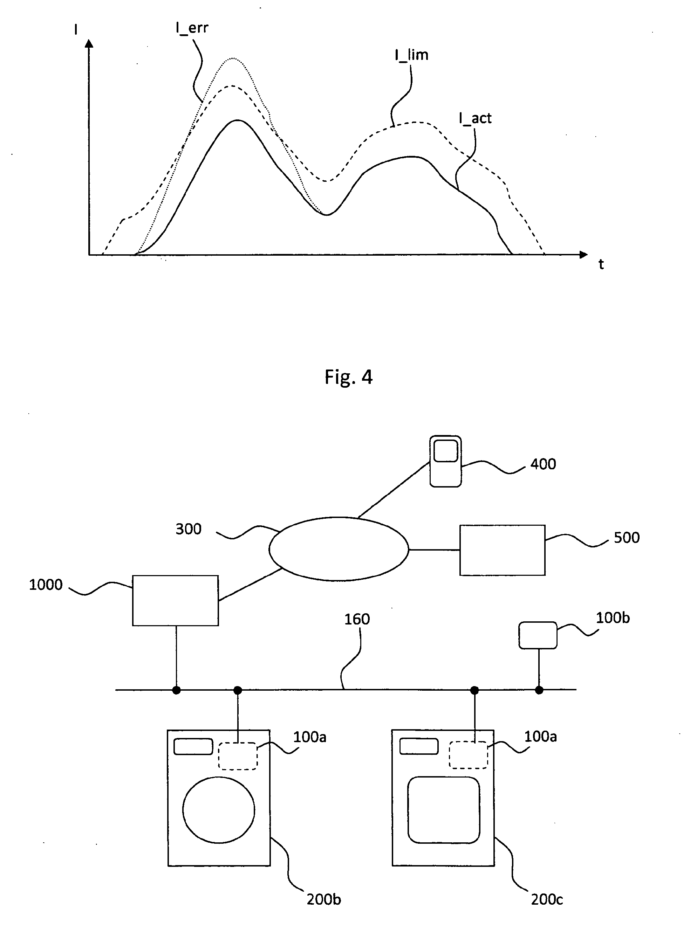

Figure 3 depicts a typical load behaviour of the washing machine 200a of figure 2 in terms of an actual current I_act. This load behaviour I_act may e.g. have been determined during a recent operating cycle of the washing machine 200a, for instance by sampling respective current values by means of the current measurement means 140 with a predetermined sample rate.

Moreover, figure 3 also depicts a stored load profile in terms of an electric current I_lim that is allowed to be drawn by the washing machine 200a depending on the operating time t. As can be seen from figure 3, the current load behaviour I_act at no time exceeds the allowed load profile I_lim. Thus, in the step 720 (figure 5) of comparing, the inventive processor means 150 (figure 1) of the control unit 100 conclude that the washing machine 200a is operating properly.

In consequence, no measures such as cutting the electric energy supply have to be taken by the control unit 100 in the case of the current load behaviour I_act.

In contrast, when operating a defective washing machine, the inventive control unit 100 will for example determine the temporal shape I_err as a current load behaviour of the washing machine, which is also depicted by figure 3. Correspondingly, a comparison of said current load behaviour I_err with the stored load profile I_lim will lead to the processor means 150 detecting an abnormal operating condition of the washing machine, because the load behaviour I_err significantly exceeds the stored load profile I_lim. Said abnormal operating condition may be signalled to a user or a central unit, and the supply of electric energy to the washing machine may be terminated.

Depending on the specific type of comparison of the current load behaviour I_err with the stored load profile I_lim, the abnormal operating condition may be detected as soon as the signal I_err exceeds the signal I_lim the first time, or only after the actual load behaviour I_err has been exceeding the start load profile I_lim for a predetermined amount of time.

Further criteria may also be defined for assessing an abnormal operating condition, for example a maximum rate of change of the current I_act drawn by the load 200a and the like. These criteria may also be stored to the storage means 130 of the inventive control unit 100. Such criteria may also be derived from or at least modified depending on an actual load behaviour monitored by the control unit 100.

In addition or alternatively to comparing the current load behaviour I_act to an upper limit I_lim, it may also be compared to a lower limit (not shown in Figure 3). Thus, it is possible to derive information on an abnormal operation of said load 200 from said load consuming too few resources. For example, in terms of electrical current consumption, said lower limit may e.g. be defined as a constant value of about 40 mA, which is significantly too low for a proper operation of the load 200 in case of a washing machine. Hence, upon detecting such significantly low current consumption, the control unit 100 may again take any of the aforementioned measures (step 730 of Fig. 5) or a combination of the various measures (signalling to user, shutting down resource supply).

Of course, the lower limit is not required to be a constant value but may also be defined as a time series of values in analogy to the upper limit.

It is also possible to define a tolerance range for an admissible actual load behaviour which may e.g. be chosen to comprise an upper limit that corresponds to a typical load behaviour such as the curve I_act of Figure 3 multiplied by a tolerance factor of 110 percent. The lower limit of said tolerance range for the actual load behaviour may e.g. be obtained by multiplying the typical load behaviour such as the curve I_act of Figure 3 with a factor of 90 percent. Thus, in total, deviations of up to ten percent regarding resource usage in either direction (positive, negative), from said typical load behaviour will not be considered as erroneous operation. More complex tolerance ranges may also be defined for applications which require an even higher degree of precision regarding error detection.

In order to increase an operational flexibility of the inventive control unit 100, particularly to improve learning a new load's load behaviour, the stored load profiles and/or the algorithms controlling the step 720 (figure 5) of comparing may be configured so as not to shut down the resource supply to the load 200 whenever there is only a slight variation of the load behaviour or a slight deviation from a stored load profile. The inventive control unit 100 may also be configured to comprise a filtering algorithm that requires even more significant deviations from a stored load profile to occur repeatedly in order to trigger an error signal or the like. This aspect of the present invention guarantees that the control unit 100 can dynamically learn a new load's actual load behaviour without shutting down too often after assigning the new load to the respective control unit 100.

According to a further embodiment, learning a new load's load behaviour may also be triggered by the control unit's user. Firstly, this may be accomplished by sending a respective command to the control unit 100 notifying it of an upcoming change in the type of load 200. Thus, the control unit 100 is prepared for the load change and may directly turn to learning the new load's load behaviour instead of signalling an error condition. The required commands may e.g. be provided via the interface 160 or by input means directly attached to a housing of the control unit 100 such as a push button or the like. I.e., by pressing such button, a user may notify the control unit on the upcoming change of the type of load.

Figure 4 depicts a typical operating scenario of the inventive control units 100a, 100b.

A first control unit 100a is integrated into a washing machine 200b. A second control unit 100a of the same type is integrated into a dryer 200c.

These two home appliances 200b, 200c are connected via said control units 100a to an electric circuit 160 of a private home.

A further inventive control unit 100b is also connected to circuit 160.

In addition to the inventive control units 100a, 100b, the system depicted by figure 4 comprises a central unit 1000, which may e.g. be part of a home automation system controlling the home appliances 200b, 200c and further devices that may be connected to the electric circuit 160 of further electric circuits (not shown) of the building.

The central unit 1000 coordinates the operation of the home appliances 200b, 200c in the following manner:

Since the inventive control unit 100a is directly integrated into the washing machine 200b, which may e.g. be done during manufacturing of the washing machine 200b, its storage means 130 (figure 1) already comprise identification information and further information on operation a characteristics of the washing machine 200b. Hence, the control unit 100a of home appliance 200b may directly communicate to the central unit 1000 the type of its load 200b and one or more typical load profiles which may occur during an operation of the home appliance 200b.

Likewise, central unit 100a of home appliance 200c may communicate corresponding data to the central unit 1000.

By comprising information on typical load profiles of the home appliances 200b, 200c the central unit 1000 may advantageously coordinate an operation of the home appliances 200b, 200c, which may be done by outputting corresponding control information to the inventive control units 200a integrated in the home appliances 200b, 200c.

For instance, if those home appliances 200b, 200c signal to central unit 1000 that a user has started operation of the respective devices 200b, 200c simultaneously, the central unit 1000 may control home appliance 200c so as to delay a start of its operation with respect to the start of operation of the washing machine 200b.

Thus, the central unit 1000 may advantageously cascade the operating times of both home appliances 200b, 200c so as to avoid a conventional circuit breaker (not shown) protecting the electric circuit 160 from excessive currents to be triggered.

Supposing that both home appliances 200b, 200c have similar load profiles I_act as depicted by figure 3, the central unit 1000 (figure 4) may e.g. delay the start of operation of the second home appliance 200c to about half of the operating time of the first home appliance 200b, so that a first maximum of current consumption of the second home appliance 200c coincides with a global minimum of current consumption of the first home appliance 200b. Consequently, in sum, the temporal shape of the aggregated current consumption of both home appliances 200b, 200c is comparatively smooth and it is guaranteed that the conventional circuit breaker will not be triggered by such operation.

Moreover, in comparison to manual activation of both appliances 200b, 200c one after another, a total operating time of both home appliances 200b, 200c is reduced by the inventive control with the central unit 1000 and the respective control units 100a.

In addition, a load profile provided from the further control unit 100b to the central unit 1000 may also be considered when scheduling the operating/activating times by the central unit 1000.

Data communication between the control units 100a, 100b and the central unit 1000 is preferably accomplished via a power line interface, wherein high frequency communication signals are transmitted over the existing lines of the electric circuit 160. Other communication interfaces, particularly wireless interfaces such as WLAN and the like, may also be employed.

The central unit 1000 may also comprise gateway functionality in that it establishes a data communication with a network such as a public internet 300 or another internet protocol (IP) - based network.

This way, operational data, signalling and the like may be transmitted from the premises comprising the home appliances 200b, 200c to e.g. a user's PDA (personal digital assistant) 400 or any other remote device capable of data exchange with network 300. Likewise, the remote user may control the devices 1000, 100a, 100b by entering respective commands to the PDA 400.

It is also possible to include an operator of the public power supply grid into the control procedure of the inventive control unit 100a, 100b.

For this purpose, the operator's central processing site 500 may also be connected to the central unit 1000 via the public internet 300.

The site 500 may e.g. be provided with actual power consumption information retrieved from the inventive control units 100a by means of their measuring means 140. Furthermore, learned and/or other types of stored load profiles may also be transmitted from the central unit 1000 to the operator's site 500.

A further advantage of the present invention is given by the fact that the operator of the public power supply grid may also actively control an operation of the control units 100a integrated in the home appliances 200b, 200c.

If supposing that the home appliances 200b, 200c are air-conditioning systems, which draw a comparatively large amount of electric energy, the operator of the public power supply grid may transmit control signals from his site 500 via the internet 300 and the central unit 1000 to the inventive control units 100a of the air-conditioning systems 200b, 200c, e.g. so as to alternately activate the air-conditioning systems 200b, 200c, which in times of typical overload conditions such as a summer season may advantageously avoid brownouts in the public supply grid.

That is, by employing the inventive control units 100a, the operator of the public power supply grid may actively control at least certain types of home appliances 200b, 200c associated to these control units 100a, 100b.

Figure 6 depicts a further embodiment of the present invention, wherein the inventive control unit is integrated into an electric multiple plug. For instance, an electric multiple plug 600 may be provided which comprises an input plug 610 for connection to a conventional wall power socket (not shown). The electric multiple plug 600 also comprises a plurality of output sockets 620a, 620b, 620c, wherein at least one 620c of said plurality of output sockets is connected to said input plug 610 via a control unit 100 according to the present invention. This configuration enables to flexibly operate a number of electric loads under control of the inventive control unit 100, while other devices may be connected to the conventional output sockets 620a, 620b of the electric multiple plug 600, which do not require inventive resource control.

According to a further advantageous embodiment of the present invention, the inventive control unit 100 (figure 1) is configured to determine and store one or more load profiles of loads receiving said resource R from the resource output 120 of said control unit 100, which enables said control unit 100 to dynamically learn the load behaviour and/or load profiles of loads 200 or appliances which have not previously been connected to said control unit 100. By determining and storing said load profiles of new types of loads or new types of appliances such as electric devices of a household, e.g. a washing machine, a toaster, HIFI equipment or the like, the inventive control unit 100 is able to adapt its operation to said new appliances which is very advantageous in that said control unit 100 may be chosen to control the operation of arbitrary appliances without complex configuration procedures.

The control unit 100 may also be configured to output a small sensing current at its resource output 120 which is, regarding its parameters (frequency, amperage) chosen so as not to interfere with conventional electric operation of the load 200. Upon disconnecting a first load from the output 120 and connecting a different second load to the output 120, the sensing current will be interrupted which may be employed by the control unit's processing means 150 as an indication for a change of the load type associated to the control unit 100.

Furthermore, it is also possible that the inventive control unit 100 is configured to actively exchange data with an associated load 200, either via a separate interface 160 or via a "signature" e.g. in form of high frequency signals added to the power lines of the resource output 120 or the load's electric plug, respectively. This enables the inventive control unit to scan the connected load 200 for a load type identifier, typical load profiles and the like. Moreover, if the load 200 comprises a control system itself, this control system may be notified of resource control measures scheduled by the control unit 100.

By employing a comparison 720 of load behaviour / load profiles, the inventive control unit 100 enables a sophisticated control of associated loads 200. For instance, the inventive control unit 100 may apply far more sophisticated control measures as merely cutting energy supply as is provided by conventional circuit breakers. By providing a detailed and repeated analysis of a load's actual load behaviour, the inventive control unit 100 is capable of detecting possible defects and other operational restrictions at a very early point in time, generally prior to a complete breakdown of the load 200. Hence, countermeasures such as servicing the load may be triggered to avoid further costs, damages or hazardous operating conditions.

The load behavior and load profiles utilized by the inventive control unit may e.g. be represented by one or more series of samples of physical values characterizing the load's operation, such as current values and a reactive power demand for electric loads.

The time resolution, i.e. sample rate, for the load profiles and the measurement of an actual load behavior is advantageously chosen depending on the specific algorithm employed for comparison 720 and further evaluation and may also be selected depending on the type of load.

For instance, if a control unit 100a is integrated into a washing machine 200b (figure 4), a sample rate for current measurements of about one sample per second is considered appropriate for a very detailed analysis if a complete operating cycle of the washing machine 200b is regarded. Higher sample rates may enable a more precise analysis e.g. of an electric motor or an electric pump of the washing machine 200b. For instance, to precisely assess an operating condition of these components, a sample rate of some thousand samples per second may be chosen to enable an analysis of the current in the frequency domain, e.g. via a Fast Fourier Transform, FFT.

Furthermore, it is possible to implement neural network - based learning algorithms within the inventive control unit 100 for adapting to different loads.

The inventive control unit 100 may further be configured to dynamically change parameters controlling the analysis of load behavior. I.e., upon detecting deviations between a stored load profile and an actual load behavior, the control unit 100 may increase a sample rate utilized for current measurement or resource consumption measurement in general, respectively, which enables a more detailed analysis in cases where errors are more likely to occur.

Apart from assessing a single temporal shape of the load's resource consumption, i.e. a single load curve or load profile, several sets of load behavior data which have been collected during subsequent operating cycles of the load may be compared to each other in order to gather data on the load's operational state, whereby an aging process may be detected and quantified.

Advantageously, the present invention is not limited to controlling electric energy as a resource R (figure 1). The inventive control unit 100 may rather also control other resources R such as water and/or gas and/or fuel, wherein preferably a mass flow rate and/or a pressure is considered for analysing the load behaviour. Different resources may also be provided simultaneously to a load according to the present invention. This is for instance useful when operating a washing machine 200b, wherein said control unit 100 may advantageously monitor and control resource usage of both electricity and water.

For instance, if a load primarily requires water or gas as a resource R, the inventive control unit 100 may detect abnormal operating conditions from a deviation between a load behaviour comprising mass flow sample values and a respective stored load profile. In response to such abnormal operating condition, the control unit 100 may reduce the gas and/or water supply or even completely cut the supply. In analogy to the aforementioned examples related to resource control of electricity, various countermeasures or signalling tasks and the like may be performed by the control unit 100.

According to a further embodiment of the present invention, leak detection may also be performed. If, for instance, the inventive control unit 100 detects a non-vanishing resource consumption of a load 200 consuming water or gas as a resource R during a time in which the load 200 is considered to be deactivated, the control unit 100 may conclude that there is a leak in the load's installations which causes the nonzero resource consumption. Upon such leak detection, the control unit 100 may signal this state to a user and/or cut the water/gas supply to the load 200.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Control unit (100) for controlling the supply of a resource (R), particularly electric current and/or water and/or gas and/or fuel to a load (200), wherein said control unit (100) comprises a resource input (110) for receiving said resource (R), a resource output (120) for outputting said resource (R) to said load (200), storage means (130) for storing at least one load profile which characterises a, preferably typical, load behaviour of a load (200) consuming said resource (R), measuring means (140) for determining a current load behaviour of a load (200) consuming resources (R) output by said resource output (120), processor means (150) for comparing the stored load profile with said current load behaviour and for controlling the supply of said resource (R) to said load (200) based on said comparison.

2. Control unit (100) according to claim 1, wherein said load profile comprises a plurality of values, preferably in a temporal sequence, of and/or depending on at least one physical parameter that characterizes an amount of resource consumption by said load (200), wherein said physical parameter particularly comprises a) in the case of said resource (R) comprising electric energy: an electric current and/or active power and/or reactive power, b) in the case of said resource (R) comprising water and/or gas and/or fuel: a mass flow rate and/or a pressure.

3. Control unit (100) according to one of the preceding claims, wherein said control unit (100) is configured to determine and store one or more load profiles of loads (200) receiving said resource (R) from the resource output (120) of said control unit (100).

4. Control unit (100) according to one of the preceding claims, wherein said control unit (100) comprises a communications interface (160) for exchanging data with further control units (100, 100a) and/or a central unit (400, 500, 1000) configured to coordinate a cooperation of several control units (100, 100a).

5. Control unit (100, 100a, 100b) according to claim 4, **characterized in that** said control unit (100, 100a, 100b) is configured to receive commands via said communications interface (160) and to control the supply of said resource (R) to said load (200, 200a, 200b, 200c) based on said commands.

6. Control unit (100, 100a, 100b) according to one of the preceding claims, **characterized in that** said control unit (100, 100a, 100b) is configured to control the supply of said resource (R) to said load (200, 200a, 200b, 200c) based on an activation time of said load (200) and/or on an amount of resources (R) delivered to said load within a predetermined time interval and/or on a type of said load (200).

7. Control unit (100, 100a, 100b) according to one of the preceding claims, **characterized in that** said control unit (100, 100a, 100b) is configured to compare a load's load behaviour for several operation cycles of said load (200) and to analyze changes of said load behaviour.

8. Control unit (100) according to one of the preceding claims, wherein said control unit (100) is configured to, preferably simultaneously, control the supply of a plurality of resources (R) to said load (200).

9. Electric load (200), particularly home appliance, comprising a control unit (100) according to one of the claims 1 to 8 , wherein said control unit (100) is preferably integrated into a housing or a power plug, preferably a mains plug, of said electric load (200).

10. Electric multiple plug (600) comprising an input plug (610) and a plurality of output sockets (620a, 620b, 620c), wherein at least one of said plurality of output sockets (620a, 620b, 620c) is connected to said input plug (610) via a control unit (100) according to one of the claims 1 to 8.

11. Method of operating a control unit (100) for controlling the supply of a resource (R), particularly electric current and/or water and/or gas and/or fuel to a load (200), wherein said control unit (100) comprises a resource input (110) for receiving said resource (R), a resource output (120) for outputting said resource (R) to said load (200), storage means (130) for storing at least one load profile which characterises a, preferably typical, load behaviour of a load (200) consuming said resource (R), said method comprising the following steps: determining a current load behaviour of a load (200) consuming resources (R) output by said resource output (120) by measuring means (140), comparing the stored load profile with said current load behaviour by processor means (150), and controlling the supply of said resource (R) to said load (200) based on said comparison.

12. Method according to claim 11, wherein said control unit (100, 100a, 100b) coordinates the provisioning of the resource (R) to its associated load (200) with at least one further control unit (100, 100a, 100b), preferably so as to not exceed predetermined limits regarding a current resource usage.

13. Method according to one of the claims 11 to 12, wherein said control unit (100, 100a, 100b) notifies a remote device (400, 500, 1000) of its operational state.

14. Method according to one of the claims 11 to 13, wherein said control unit (100) analyzes at least one parameter of said resource (R) being supplied to said resource input (110), wherein in the case of said resource (R) comprising electric energy, said parameter particularly comprises an electric voltage and/or a frequency, and wherein in the case of said resource (R) comprising water and/or gas and/or fuel said parameter particularly comprises a supply pressure and/or a temperature and/or a degree of purity.

15. Method according to one of the claims 11 to 14, wherein, based on said comparison and/or said analysis of said resource (R) being supplied to said resource input (110), one or more of the following steps are performed:
- signalling information related to said comparison and/or analysis and/or further operational data to a user and/or a remote device (400, 500, 1000),
- reducing an amount of said resource (R) supplied to said load (200), wherein the reduction preferably depends on said comparison and/or a type of said load (200),
- terminating the supply of said resource (R) to said load (200).
